# EUROPÄISCHE PATENTSCHRIFT

(11) **EP 3 637 076 B1**
(45) Veröffentlichungstag und Bekanntmachung des Hinweises auf die Patenterteilung: **20.12.2023**
(21) Anmeldenummer: 19185856.2
(22) Anmeldetag: 11.07.2019
(51) Int. Cl.: G01L 27/00, F01N 11/00, G01M 15/10

(54) **VERFAHREN ZUR PLAUSIBILISIERUNG EINES DRUCKSENSORS**
METHOD FOR VALIDATING A PRESSURE SENSOR
PROCÉDÉ D'ESTIMATION DE LA PLAUSIBILITÉ D'UN CAPTEUR DE PRESSION

(30) Priorität: 07.09.2018 DE 102018215195
(43) Veröffentlichungstag der Anmeldung: 15.04.2020
(73) Patentinhaber: Volkswagen AG, 38440 Wolfsburg (DE)
(72) Erfinder: Heinken, Sebastian, 38106 Braunschweig (DE); Nee, Christoph, 38440 Wolfsburg (DE)

(56) Entgegenhaltungen:
- DE-A1-102014 209 718
- DE-A1-102016 225 356
- JP-A- 2005 307 880

## Beschreibung

Die Erfindung betrifft ein Verfahren zur Plausibilisierung eines Drucksensors. Durch das Verfahren soll ermittelt werden, ob die mit dem Drucksensor gemessenen Druckwerte plausibel sind. Der Drucksensor ist insbesondere an einer Abgasbehandlungseinheit (einem Katalysator, einem Speicherelement zur Speicherung/ Zwischenspeicherung einer Komponente, einem Partikelfilter, etc.) zur Bestimmung eines über der Abgasbehandlungseinheit vorliegenden Differenzdrucks vorgesehen.

Drucksensoren, die z. B. in Abgasleitungen zur Überwachung von Partikelfiltern eingesetzt werden, können temperaturabhängigen Störungen unterworfen sein. Diese Störungen können z. B. durch gefrierendes Kondenswasser hervorgerufen werden, durch das die Zuleitungen des Drucksensors zumindest teilweise oder vollständig verschlossen werden können und/oder eine Membran des Drucksensors in ihrer Funktion beeinträchtigt werden kann. Insbesondere kann der Drucksensor bei einem Kaltstart einer Verbrennungskraftmaschine und/oder bei Fahrten mit geringer Last bis zum Vorliegen einer vollständigen Durchwärmung falsche und damit unplausible Messwerte liefern. Nach einer Durchwärmung kann der Drucksensor wieder vollständig nutzbar sein.

Diese Störungen stellen insbesondere keine irreversiblen Beschädigungen des Drucksensors dar und können durch physikalische oder messtechnische Effekte begründet sein.

Dabei ist es wichtig, diese Störungen zu erkennen und von tatsächlichen Sensordefekten zu unterscheiden. Weiter ist wichtig zu erkennen, dass eine Störung des Drucksensors vorliegt, so dass Messwerte als nicht plausibel erkannt werden können. Damit können die Messwerte, die für zahlreiche Anwendungen in einem Kraftfahrzeug verwendet werden (z. B. Steuerung der Verbrennungskraftmaschine, Durchführen von Regenerationsvorgängen des Partikelfilters, also Beladungserkennung, Turboladerdiagnose, Ladedruckregelung, Füllungserfassung etc.), falls diese als unplausibel erkannt wurden, für diese Anwendungen unberücksichtigt bleiben. Erst nach Erkennen der Plausibilität können die Messwerte zur weiteren Nutzung für andere Anwendungen wieder freigegeben werden.

Aus der DE 10 2012 203 283 A1 ist ein Verfahren zur Plausibilisierung eines Signals eines Drucksensors bekannt. Der Drucksensor ist einer Einspritzvorrichtung für eine Verbrennungskraftmaschine zugeordnet, wobei die Einspritzvorrichtung über ein Überdruckventil entspannt werden kann. Hier wird ein Öffnen des Überdruckventils abgewartet, dass nach Abstellen der Verbrennungskraftmaschine infolge der Erwärmung des Kraftstoffes in der Einspritzvorrichtung auftritt. Dabei wird der höchste Druckmesswert mit dem bekannten Öffnungsdruck des Überdruckventils abgeglichen.

Aus der DE 10 2013 200 570 A1 ist ein anderes Verfahren zur Plausibilisierung einer Systemdruckbestimmung bekannt. Dabei wird bei einer Druckmessung eine Unstetigkeitsstelle einer Volumen-Druck-Kennlinie mit einer erwarteten Unstetigkeitsstelle verglichen.

Die DE 10 2016 225 356 A1, JP 2005 307880 A sowie DE 10 2014 209 718 A1 offenbaren jeweils ein Verfahren zur Plausibilisierung eines Drucksensors.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das Messwerte eines Drucksensors auf deren Plausibilität geprüft werden können. Insbesondere soll durch das Verfahren die Art der Störung eines Drucksensors bestimmt werden können.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden.

Es wird ein Verfahren zur Plausibilisierung eines Drucksensors vorgeschlagen. Der Drucksensor nimmt bei der Messung Messwerte eines Differenzdrucks auf. Die Messwerte des Drucksensors werden mit auf Basis eines Modells berechneten Referenzwerten für den Differenzdruck verglichen. Zur Bestimmung der Plausibilität werden bei dem Verlauf der Messwerte zumindest eine Abweichung der Messwerte von den Referenzwerten (also Messwert - Referenzwert = Abweichung) und eine Differenz zwischen einer ersten Steigung der sich (über die Zeit [Sekunde]) ändernden Messwerte und einer zweiten Steigung (also f'(Messwert) - f'(Abweichung) = Differenz) der sich (über die Zeit) ändernden Referenzwerte betrachtet.

Der Drucksensor ist insbesondere über eine erste Leitung mit einem ersten Messpunkt und über eine zweite Leitung mit einem zweiten Messpunkt verbunden. Z. B. ist der erste Messpunkt in einer Abgasleitung stromauf einer Abgasbehandlungseinheit und der zweite Messpunkt stromab einer bzw. derselben Abgasbehandlungseinheit angeordnet. Der Drucksensor weist z. B. eine Membran auf, die einen Druckunterschied zwischen einem ersten Druck in der ersten Leitung und einem zweiten Druck in der zweiten Leitung als Differenzdruck auswertet.

Insbesondere wird bei der Messung des Differenzdrucks eine Abgasbehandlungseinheit, bevorzugt ein Partikelfilter, überwacht. Insbesondere soll dabei eine zunehmende Zusetzung des Partikelfilters durch Ruß erkannt werden.

Es ist bekannt, dass derartige Drucksensoren z. B. infolge Vereisung in ihrer Funktion beeinträchtigt werden. Dabei ist aufgrund der zahlreichen Möglichkeiten der Vereisung (z. B. Vereisung im Bereich der ersten Leitung und/oder der zweiten Leitung, Vereisung der Membran, etc.) die dadurch bedingte Änderung der Messwerte nicht genau vorhersagbar.

Damit ist insbesondere auch nicht vorhersagbar, in wieweit eine Änderung der Messwerte (insbesondere eine Abweichung von Referenzwerten) auf eine Vereisung oder auf ein anderes Problem zurückzuführen ist.

Hier wird insbesondere ein Verfahren vorgeschlagen, das es ermöglicht, einen Drucksensor kontinuierlich auf Plausibilität zu prüfen, also zu prüfen, ob die Messwerte den tatsächlich vorliegenden Differenzdruck wiedergeben. Dabei erfolgt ein Abgleich der Messwerte mit Referenzwerten, die durch ein Modell vorgegeben werden. Dieser Abgleich kann ein Korrelations- oder Schätzverfahren sein, mit dem ein Plausibilitäts-Kriterium gebildet wird. Dieses Kriterium gibt insbesondere Aufschluss darüber, ob der Messwert nutzbar ist oder nicht. Im Falle einer Korrelation ergibt sich insbesondere ein Übereinstimmungskoeffizient, der z. B. bei Unterschreiten einer Schwelle einen nicht plausiblen Messwert bzw. eine Störung des Drucksensors erkennt. Beim Verfahren über die Schätzung kann ein Erwartungswert für einen Sensoroffset, also die Differenz zwischen Messwerten und Referenzwerten bestimmt werden, der üblicherweise bei null (0) hpa [Hektopascal] liegen sollte. Im (temporären) Störungsfall weicht dieser Sensoroffset erheblich vom vorgenannten störungsfreien Wert von 0 hpa ab und ist damit größer oder kleiner als 0.

Im Falle einer erkannten Unplausibilität wird der Drucksensor als qualitativ unbrauchbar deklariert, damit weitere Anwendungen, die den Messwert üblicherweise verarbeiten, nun ohne Berücksichtigung des fehlerhaften Messwertes weiterbetrieben werden können.

Das Modell ist insbesondere in einer Steuereinheit hinterlegt und kann z. B. über einen Prüfstand durch Abfahren bestimmter Betriebspunkte bestimmt werden. Aus dem Modell gehen Referenzwerte für den Differenzdruck hervor, die bei bestimmten Betriebspunkten der Verbrennungskraftmaschine bzw. des Kraftfahrzeugs zu erwarten sind. Die Referenzwerte werden im Betrieb des Kraftfahrzeugs anhand des vorliegenden Betriebspunktes z. B. rechnerisch ermittelt und insbesondere zeitlich mit den Messwerten korreliert.

Mit dem vorgeschlagenen Verfahren soll nun insbesondere die Möglichkeit bereitgestellt werden zu differenzieren, ob Drucksensor und Modell (also Messwerte des Drucksensors und Referenzwerte aus dem Modell) aufgrund z. B. von Ruß-Beladungen voneinander abweichen (Teil des korrekten Betriebs des Drucksensors) oder ob tatsächlich Beeinträchtigungen oder sogar Verstopfungen durch Eis oder andere Medien vorliegen. Auch sich ändernde Übergangswiderstände können insbesondere damit ausgeblendet werden.

Die mögliche Nutzung der Messwerte des Drucksensors für andere Anwendungen bzw. nachgelagerte Verfahrensfunktionen (z. B. Beladungserkennung des Partikelfilters; Partikelfilter-/ Turbolader-Diagnose, Verfahrensfunktionen wie Ladedruckregelungen und Füllungserfassung einer Verbrennungskraftmaschine) erhöht sich dadurch maßgeblich, wobei zudem unberechtigte Fehlerspeichereinträge für defekte Drucksensoren sowie fälschlich erkannte Notwendigkeiten zur Einleitung einer Regeneration des Partikelfilters (zum Abbrennen von Ruß) vermieden werden können.

Vorliegend wird insbesondere vorgeschlagen, die Messwerte und die Referenzwerte zeitlich kontinuierlich zu vergleichen. Dabei werden die Messwerte und Referenzwerte insbesondere nicht ausschließlich absolut miteinander verglichen, sondern durch Korrelation und/oder Schätzung von Steigungs- und Offset-Informationen abgeglichen.

Insbesondere wird die Abweichung und/oder die Differenz als Betrag (also unabhängig vom Vorzeichen Abweichung und/oder der Differenz) verwendet.

Erfindungsgemäß wird für die Abweichung und die Differenz ein Korrelationsfaktor durch eine Kreuzkorrelation ermittelt, wobei bei Unterschreiten eines Grenzwerts für den Korrelationsfaktor von einem nicht plausiblen Messwert ausgegangen wird.

Eine Kreuzkorrelation von Parametern ist insbesondere ein im Allgemeinen bekanntes mathematisches Verfahren zum Vergleich von zwei unterschiedlichen Parametern bzw. zwei unterschiedlichen physikalischen Größen (vorliegend Druck bzw. Veränderung des Drucks über der Zeit anhand der Messwerte bzw. deren Verlauf über der Zeit und anhand der Referenzwerte bzw. deren Verlauf über der Zeit) bzw. zur Bestimmung einer Korrelation zwischen diesen Parametern.

Erfindungsgemäß werden die Parameter hierbei unterschiedlich stark gewichtet. D. h. insbesondere, dass eine auftretende Abweichung stärker berücksichtigt wird als eine Differenz.

Insbesondere weist die Abweichung bei der Kreuzkorrelation einen Anteil an einer Gewichtung von mindestens 70 % und die Differenz einen Anteil von höchstens 30 % auf.

Alternativ werden bei der Kreuzkorrelation die innerhalb eines zurück liegenden Zeitintervalls ermittelten Abweichungen und Differenzen berücksichtigt. Das Zeitintervall beträgt z. B. höchstens 10 Minuten, insbesondere höchstens fünf Minuten, bevorzugt höchstens eine (1) Minute. Insbesondere beträgt das Zeitintervall mindestens eine (1) Sekunde, bevorzugt mindestens fünf Sekunden.

Es werden zeitlich weiter zurückliegende Messwerte und Referenzwerte für die Abweichung und für die Differenz mit einer in Abhängigkeit vom zeitlichen Abstand zunehmend geringer werdenden Gewichtung berücksichtigt.

Insbesondere werden die Messwerte des Drucksensors nur bei erkannter Plausibilität für andere Anwendungen (Verfahrensfunktionen, z. B. Beladungserkennung des Partikelfilters; Partikelfilter-/ Turbolader-Diagnose, Verfahrensfunktionen wie Ladedruckregelungen und Füllungserfassung einer Verbrennungskraftmaschine) berücksichtigt.

Insbesondere wird durch den Drucksensor ein über einer Abgasbehandlungseinheit vorliegender Differenzdruck ermittelt.

Es wird weiter ein Kraftfahrzeug vorgeschlagen, zumindest aufweisend eine Verbrennungskraftmaschine, eine Abgasleitung zum Abführen eines Abgases der Verbrennungskraftmaschine und eine in der Abgasleitung angeordnete Abgasbehandlungseinheit mit einem Drucksensor zur Ermittlung eines über der Abgasbehandlungseinheit vorliegenden Differenzdrucks. Zusätzlich ist eine Steuereinheit vorgesehen, die zur Durchführung des beschriebenen Verfahrens geeignet ausgeführt ist bzw. die das Verfahren durchführt bzw. durchführen kann.

Insbesondere ist die Abgasbehandlungseinheit ein Partikelfilter.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens ausführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf das Kraftfahrzeug, das System, das Speichermedium oder das computerimplementierte Verfahren übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen
- Fig. 1:: ein Kraftfahrzeug 2 mit einem Antriebsstrang 1;
- Fig. 2:: erste Diagramme; und
- Fig. 3:: zweite Diagramme.

Das Kraftfahrzeug 16 weist eine Verbrennungskraftmaschine 17, eine Abgasleitung 18 zum Abführen eines Abgases der Verbrennungskraftmaschine 17 und eine in der Abgasleitung 18 angeordnete Abgasbehandlungseinheit 15 mit einem Drucksensor 1 zur Ermittlung eines über der Abgasbehandlungseinheit 15 vorliegenden Differenzdrucks 2. Zusätzlich ist eine Steuereinheit 19 vorgesehen, die zur Durchführung des beschriebenen Verfahrens geeignet ausgeführt ist. In der Steuereinheit 19 ist ein Modell 4 hinterlegt, durch das Referenzwerte 5 für den Differenzdruck 2 in Abhängigkeit von einem vorliegenden Betriebspunkt rechnerisch (und theoretisch) bestimmbar sind.

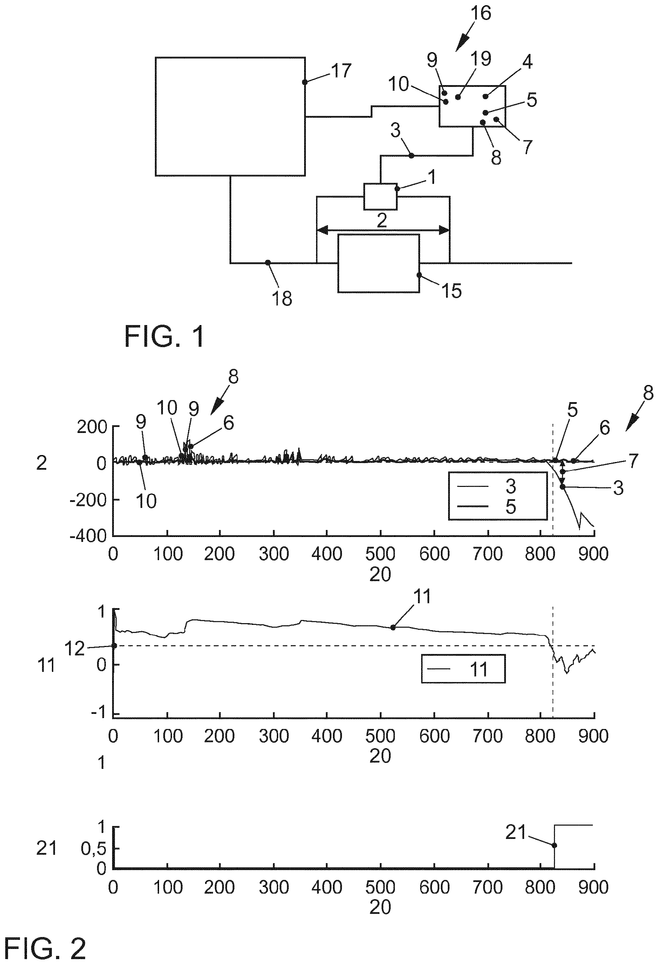

Fig. 2 zeigt erste Diagramme. Bei dem obersten Diagramm ist auf der vertikalen Achse der Differenzdruck 2 aufgetragen. Auf der horizontalen Achse ist die Zeit 20 aufgetragen. Weiter sind die Verläufe 6 der Messwerte 3 und der Referenzwerte 5 über der Zeit 20 aufgetragen.

Aus den Verläufen 6 ist erkennbar, dass einerseits zu bestimmten Zeitpunkten die erste Steigung 9 des Verlaufs 6 der Messwerte 3 die zweite Steilung 10 des Verlaufs 10 der Referenzwerte 5 übersteigt (z. B. zwischen den Werten 0 und ca. 120 der Zeit 20. Jenseits des Wertes 800 der Zeit 20 weicht der Verlauf 6 der Messwerte 3 zunehmend von dem Verlauf 6 der Referenzwerte 5 ab.

Bei dem mittleren Diagramm ist auf der vertikalen Achse der Korrelationsfaktor 2 (zwischen -1 und 1) aufgetragen. Auf der horizontalen Achse ist die Zeit 20 aufgetragen. Weiter ist der Verlauf des Korrelationsfaktors 11 über der Zeit 20 aufgetragen.

Der Korrelationsfaktor 11 wird in Abhängigkeit von der Korrelation der Abweichung 7 und der Differenz 8 ermittelt. Erkennbar ist, dass der Korrelationsfaktor 11 bereits bei der auftretenden Differenz 8 zwischen den Werten 0 und ca. 120 der Zeit 20 aufgrund der Schwankung des Verlaufs 6 der Messwerte 3 deutlich geringer ist. Ein Grenzwert 12 des Korrelationsfaktors 11, bei dem der Zustand 21 auf eine Vereisung des Drucksensors 2 hinweisen würde, wird jedoch nicht erreicht.

Aufgrund der starken Abweichung 7 zwischen den Messwerten 3 und den Referenzwerten 5 jenseits des Wertes 800 der Zeit 20 und der Differenz 8 der Steigungen 9, 10 in diesem Bereich, unterschreitet der Korrelationsfaktor 11 hier den Grenzwert 12, so dass ein Zustand 21 der Vereisung (siehe unteres Diagramm) erkannt wird.

Ab diesem Zeitpunkt werden die Messwerte 3 als nicht plausibel erkannt und für andere Anwendungen nicht weiterverwendet.

Bei dem unteren Diagramm ist auf der vertikalen Achse der Zustand 21 aufgetragen (Null: keine Vereisung; 1: Vereisung erkannt). Auf der horizontalen Achse ist die Zeit 20 aufgetragen. Weiter ist der Verlauf des anhand des Verlaufs des Korrelationsfaktors 11 identifizierten Zustands 21 über der Zeit 20 aufgetragen.

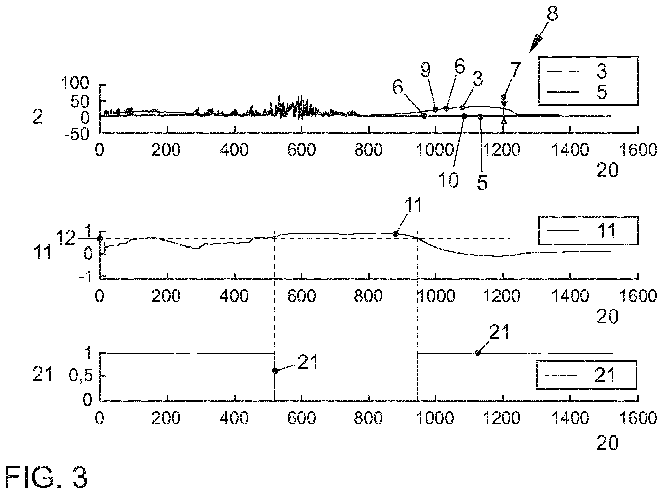

Fig. 3 zeigt zweite Diagramme. Bei dem obersten Diagramm ist auf der vertikalen Achse der Differenzdruck 2 aufgetragen. Auf der horizontalen Achse ist die Zeit 20 aufgetragen. Weiter sind die Verläufe 6 der Messwerte 3 und der Referenzwerte 5 über der Zeit 20 aufgetragen.

Bei dem mittleren Diagramm ist auf der vertikalen Achse der Korrelationsfaktor 2 (zwischen -1 und 1) aufgetragen. Auf der horizontalen Achse ist die Zeit 20 aufgetragen. Weiter ist der Verlauf des Korrelationsfaktors 11 über der Zeit 20 aufgetragen.

Bei dem unteren Diagramm ist auf der vertikalen Achse der Zustand 21 aufgetragen (Null: keine Vereisung; 1: Vereisung erkannt). Auf der horizontalen Achse ist die Zeit 20 aufgetragen. Weiter ist der Verlauf des anhand des Verlaufs des Korrelationsfaktors 11 identifizierten Zustands 21 über der Zeit 20 aufgetragen.

Hier ist erkennbar, dass mehrmals der Zustand 21 der Vereisung erkannt wird (zwischen den Werten null und 500 und ab dem Wert 950 der Zeit 20).

Es ist zu beachten, dass hier ein anderer Grenzwert 12 für den Korrelationsfaktor 11 festgelegt wurde.

### Bezugszeichenliste

- 1: Drucksensor
- 2: Differenzdruck
- 3: Messwert
- 4: Modell
- 5: Referenzwert
- 6: Verlauf
- 7: Abweichung
- 8: Differenz
- 9: erste Steigung
- 10: zweite Steigung
- 11: Korrelationsfaktor
- 12: Grenzwert
- 13: Zeitintervall
- 14: Abstand
- 15: Abgasbehandlungseinheit
- 16: Kraftfahrzeug
- 17: Verbrennungskraftmaschine
- 18: Abgasleitung
- 19: Steuereinheit
- 20: Zeit
- 21: Zustand

## Patentansprüche

1. Verfahren zur Plausibilisierung eines Drucksensors (1), der bei der Messung eines Differenzdrucks (2) Messwerte (3) aufnimmt, wobei die Messwerte (3) des Drucksensors (1) mit auf Basis eines Modells (4) berechneten Referenzwerten (5) für den Differenzdruck (2) verglichen werden; wobei zur Bestimmung der Plausibilität bei dem Verlauf (6) der Messwerte (3) zumindest eine Abweichung (7) der Messwerte (3) von den Referenzwerten (5) und eine Differenz (8) zwischen einer ersten Steigung (9) der sich ändernden Messwerte (3) und einer zweiten Steigung (10) der sich ändernden Referenzwerte (5) betrachtet werden; wobei für die Abweichung (7) und die Differenz (8) ein Korrelationsfaktor (11) durch eine Kreuzkorrelation ermittelt wird, wobei bei Unterschreiten eines Grenzwerts (12) für den Korrelationsfaktor (11) von einem nicht plausiblen Messwert (3) ausgegangen wird, **dadurch gekennzeichnet, dass** bei der Kreuzkorrelation zumindest
a) die Parameter Abweichung (7) und Differenz (8) unterschiedlich stark gewichtet werden; oder
b) die innerhalb eines zurückliegenden Zeitintervalls (13) ermittelten Abweichungen (7) und Differenzen (8) berücksichtigt werden, wobei zeitlich weiter zurückliegende Messwerte (3) und Referenzwerte (5) für die Abweichung (7) und die Differenz (8) mit einer in Abhängigkeit vom zeitlichen Abstand (14) zunehmend geringer werdenden Gewichtung berücksichtigt werden.

2. Verfahren nach Patentanspruch 1, wobei zumindest die Abweichung (7) oder die Differenz (8) als Betrag verwendet wird.

3. Verfahren nach einem der vorhergehenden Patentansprüche, wobei die Abweichung (7) bei der Kreuzkorrelation einen Anteil an einer Gewichtung von mindestens 70 % und die Differenz (8) einen Anteil von höchstens 30 % aufweist.

4. Verfahren nach einem der vorhergehenden Patentansprüche, wobei die Messwerte (3) des Drucksensors (1) nur bei erkannter Plausibilität für andere Anwendungen berücksichtigt werden.

5. Verfahren nach einem der vorhergehenden Patentansprüche, wobei durch den Drucksensor (1) ein über einer Abgasbehandlungseinheit (15) vorliegender Differenzdruck (2) ermittelt wird.

6. Kraftfahrzeug (16), zumindest aufweisend eine Verbrennungskraftmaschine (17), eine Abgasleitung (18) zum Abführen eines Abgases der Verbrennungskraftmaschine (17) und eine in der Abgasleitung (18) angeordnete Abgasbehandlungseinheit (15) mit einem Drucksensor (1) zur Ermittlung eines über der Abgasbehandlungseinheit (15) vorliegenden Differenzdrucks (2), wobei zusätzlich eine Steuereinheit (19) vorgesehen ist, die zur Durchführung des Verfahrens nach einem der vorhergehenden Patentansprüche geeignet ausgeführt ist.

7. Kraftfahrzeug (16) nach Patentanspruch 6, wobei die Abgasbehandlungseinheit (15) ein Partikelfilter ist.

## Claims

1. A method for checking the plausibility of a pressure sensor (1) which records measurement values (3) during the measurement of a differential pressure (2), the measurement values (3) of the pressure sensor (1) being compared with reference values (5) for the differential pressure (2) which are calculated on the basis of a model (4); at least one deviation (7) of the measurement values (3) from the reference values (5) and a difference (8) between a first gradient (9) of the changing measurement values (3) and a second gradient (10) of the changing reference values (5) being taken into account in order to determine the plausibility of the curve (6) of the measurement values (3); a correlation factor (11) being determined for the deviation (7) and the difference (8) by cross-correlation, and a non-plausible measurement value (3) being assumed if a threshold value (12) for the correlation factor (11) is not met, **characterized in that** in the cross-correlation, at least
a) the parameters of deviation (7) and difference (8) are weighted differently; or
b) the deviations (7) and differences (8) determined within a preceding interval (13) are taken into account, measurement values (3) and reference values (5) for the deviation (7) and the difference (8) that are from further back in time being taken into account with a weighting which becomes increasingly smaller according to temporal distance (14).

2. The method according to claim 1, wherein at least the deviation (7) or the difference (8) is used as an absolute value.

3. The method according to any of the preceding claims, wherein in the cross-correlation, the deviation (7) has a weighting proportion of at least 70% and the difference (8) has a proportion of at most 30%.

4. The method according to any of the preceding claims, wherein the measurement values (3) of the pressure sensor (1) are taken into account for other applications only when plausibility is detected.

5. The method according to any of the preceding claims, wherein a differential pressure (2) present across an exhaust gas treatment unit (15) is determined by the pressure sensor (1).

6. A motor vehicle (16), at least comprising an internal combustion engine (17), an exhaust gas line (18) for discharging an exhaust gas of the internal combustion engine (17), and an exhaust gas treatment unit (15) which is arranged in the exhaust gas line (18) and has a pressure sensor (1) for determining a differential pressure (2) present across the exhaust gas treatment unit (15), wherein a control unit (19) is additionally provided which is suitable for carrying out the method according to any of the preceding claims.

7. The motor vehicle (16) according to claim 6, wherein the exhaust gas treatment unit (15) is a particle filter.

## Revendications

1. Procédé permettant de contrôler la plausibilité d'un capteur de pression (1) qui enregistre des valeurs de mesure (3) lors de la mesure d'une pression différentielle (2), dans lequel les valeurs de mesure (3) du capteur de pression (1) sont comparées avec des valeurs de référence (5) calculées sur la base d'un modèle (4) pour la pression différentielle (2) ; dans lequel, pour la définition de la plausibilité lors de l'évolution (6) des valeurs de mesure (3), au moins un écart (7) entre les valeurs de mesure (3) et les valeurs de référence (5) et une différence (8) entre une première pente (9) des valeurs de mesure (3) changeantes et une seconde pente (10) des valeurs de référence (5) changeantes sont considérés ; dans lequel, pour l'écart (7) et la différence (8), un facteur de corrélation (11) est déterminé par une corrélation croisée, dans lequel, en cas de non-dépassement d'une valeur limite (12) pour le facteur de corrélation (11), on part d'une valeur de mesure (3) non plausible, **caractérisé en ce que,** lors de la corrélation croisée, au moins
a) les paramètres écart (7) et différence (8) sont fortement pondérés différemment ; ou
b) les écarts (7) et les différences (8) déterminés dans un intervalle de temps (13) antérieur sont pris en compte, dans lequel des valeurs de mesure (3) et des valeurs de référence (5) encore plus antérieures dans le temps pour l'écart (7) et la différence (8) sont prises en compte avec une pondération devenant de plus en plus faible en fonction de la distance temporelle (14).

2. Procédé selon la revendication de brevet 1, dans lequel au moins l'écart (7) ou la différence (8) est utilisé comme valeur.

3. Procédé selon l'une des revendications de brevet précédentes, dans lequel, lors de la corrélation croisée, l'écart (7) présente une proportion dans une pondération d'au moins 70 % et la différence (8) présente une proportion d'au plus 30 %.

4. Procédé selon l'une des revendications de brevet précédentes, dans lequel les valeurs de mesure (3) du capteur de pression (1) ne sont prises en compte que lorsque la plausibilité est reconnue pour d'autres applications.

5. Procédé selon l'une des revendications de brevet précédentes, dans lequel une pression différentielle (2) présente au-dessus d'une unité de traitement des gaz d'échappement (15) est déterminée par le capteur de pression (1).

6. Véhicule automobile (16), présentant au moins un moteur à combustion interne (17), une conduite de gaz d'échappement (18) pour l'évacuation de gaz d'échappement du moteur à combustion interne (17) et une unité de traitement des gaz d'échappement (15) disposée dans la conduite de gaz d'échappement (18) avec un capteur de pression (1) permettant de déterminer une pression différentielle (2) présente au-dessus de l'unité de traitement des gaz d'échappement (15), dans lequel une unité de commande (19) est en outre prévue, laquelle est configurée de manière à être adaptée pour la mise en oeuvre du procédé selon l'une des revendications de brevet précédentes.

7. Véhicule automobile (16) selon la revendication de brevet 6, dans lequel l'unité de traitement des gaz d'échappement (15) est un filtre à particules.
